# EUROPÄISCHE PATENTANMELDUNG

(11) **EP 1 260 646 A1**
(43) Veröffentlichungstag der Anmeldung: **27.11.2002**
(21) Anmeldenummer: 02007430.8
(22) Anmeldetag: 28.03.2002
(51) Int. Cl.: E04C 1/39

(54) **Bauelementformkörper, insbesondere für den Garten- und Landschaftsbau**

(30) Priorität: 23.05.2001 DE 20108683 U
(71) Anmelder: Hirsch Porozell GmbH, 9555 Glanegg 58 (AT)
(72) Erfinder: Eder, Ekkehard, 9020 Klagenfurt (AT)
(74) Vertreter: Patentanwälte Dr. Solf & Zapf

(57) **Zusammenfassung**

Die Erfindung betrifft Bauelementformkörper für den Garten- und Landschaftsbau aufweisend:
einen im wesentlichen kastenförmigen Grundkörper (2), sowie
zwei Verbindungselemente (20, 40), welche an gegenüberliegenden Stirnwandungen (5, 6) des kastenförmigen Grundkörpers (2) angeordnet sind, wobei
die Verbindungselemente (20, 40) eine Höhe aufweisen, die in etwa der Hälfte der Höhe des Grundkörpers (2) entspricht und
die Verbindungselemente (20, 40) in der Höhe eines Verbindungselements (20, 40) zueinander versetzt angeordnet sind, so daß ein Verbindungselement mit der Oberseite und das andere Verbindungselement mit der Unterseite des kastenförmigen Grundkörpers (2) abschließt, wobei die Verbindungselemente bezüglich der Höhe des Grundkörpers (2) oberseitig und unterseitig eine Steckkontur aufweisen, sowie Abschlußformkörper hierfür.

## Beschreibung

Die Erfindung betrifft Bauelementformkörper für den Garten- und Landschaftsbau nach dem Oberbegriff des Anspruch 1 sowie Abschlußformkörper für Bauelementformkörper nach dem Oberbegriff des Anspruch 20.

Es ist bekannt, zur Erstellung von Hochbeeten, Beet- oder Raseneinfassungen sowie gestuften Beeten an Hängen Bauelemente in Form von Beton bzw. Zementsteinsäulen oder Holzeinfassungen zu verwenden.

Aufgabe der Erfindung ist es Bauelementformkörper insbesondere für den Garten- und Landschaftsbau zu schaffen, welche leicht und einfach aufzustellen sind, kostengünstig sind sowie eine weite Variabilität bezüglich der Formgebung der Einfassung od. dgl. ermöglichen.

Die Aufgabe wird mit Bauelementformkörpern mit den Merkmalen des Anspruch 1 gelöst.

Es ist weiterhin eine Aufgabe einen Abschlußformkörper für Formkörper nach Anspruch 1 zu schaffen, diese Aufgabe wird mit den Merkmalen des Anspruch 20 gelöst.

Vorteilhafte Weiterbildungen sind in Unteransprüchen gekennzeichnet.

Erfindungsgemäß werden Bauelementformkörper geschaffen, welche einen kastenartigen Grundkörper aufweisen, an dessen Stirnflächen je ein Verbindungselement angeordnet ist. Diese Verbindungselemente sind im wesentlichen zylinderförmig ausgebildet und erstrecken sich über die Hälfte der Höhe des Kastens. Hierbei ist ein Verbindungselement vom Boden des Kastens ausgehend bis etwa zu seiner Hälfte sich hinerstreckend ausgebildet und das Verbindungselement an der gegenüberliegenden Stirnseite erstreckt sich von dem Niveau einer Oberseite des Kastens in Richtung zur Bodenseite bis etwa zur Hälfte der Kastenhöhe. Die Verbindungselemente weisen auf ihrer Oberseite eine einsteckbare Verbindungskontur und auf ihrer Unterseite eine korrespondierend ausgebildete aufnehmende Kontur auf, so daß ein Bauelementformkörper mit einem Verbindungselement, welches benachbart zur Oberseite angeordnet ist, an einen benachbarten Bauelementformkörper an dessen bodenseitiges Verbindungselement angesteckt werden kann. Die Konturen weisen dabei insbesondere eine Art radiale Vielzahnung auf, welche es erlaubt die Bauelemente gewinkelt zueinander beispielsweise jeweils in 30°-Schritten schwenkbar gewinkelt aneinander anzuordnen.

Ferner weisen die Bauelementformkörper Bohrungen bzw. Durchgangslöcher, insbesondere axial in den zylindrischen Verbindungselementen auf, so daß die Formkörper - auch eine Mehrzahl von übereinander gestapelt gesteckten Formkörpern - mittels Stangen oder Pfählen im Untergrund fest verankert werden können.

Ferner werden erfindungsgemäß Schlußsteine für eine Umfassung oder eine Wand aus den Formkörpern angegeben, welche eine allseits insbesondere oberseitig glatte Fläche der erstellten Einfassung ergeben. Diese Abschlußformkörper weisen nur an einer Seite ein Verbindungselement auf, wobei dieses Verbindungselement auf seiner mit der Bodenseite des Kastens abschließenden Fläche eine aufnehmende Kontur aufweist und sich das Verbindungselement über die gesamte Höhe des Kastens erstreckt und mit dessen Oberseite ebenflächig und glatt abschließt.

Im folgenden wird die Erfindung anhand einer Zeichnung erläutert. Es zeigen dabei:
- Fig. 1: einen erfindungsgemäßen Bauelementformkörper in einer perspektivischen Ansicht auf die Oberseite;
- Fig. 2: einen Bauelementformkörper nach Anspruch 1 in einer perspektivischen Ansicht auf die Unterseite;
- Fig. 3: einen Bauelementformkörper gemäß Fig. 1 in einer seitlichen Ansicht;

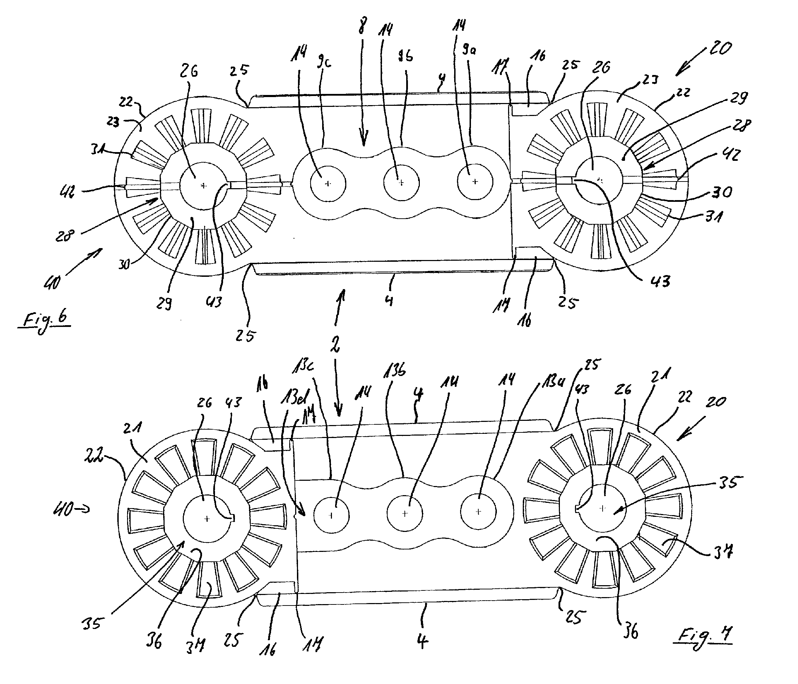

- Fig. 4: einen Bauelementformkörper gemäß Fig. 1 in einer Ansicht auf eine Stirnseite;

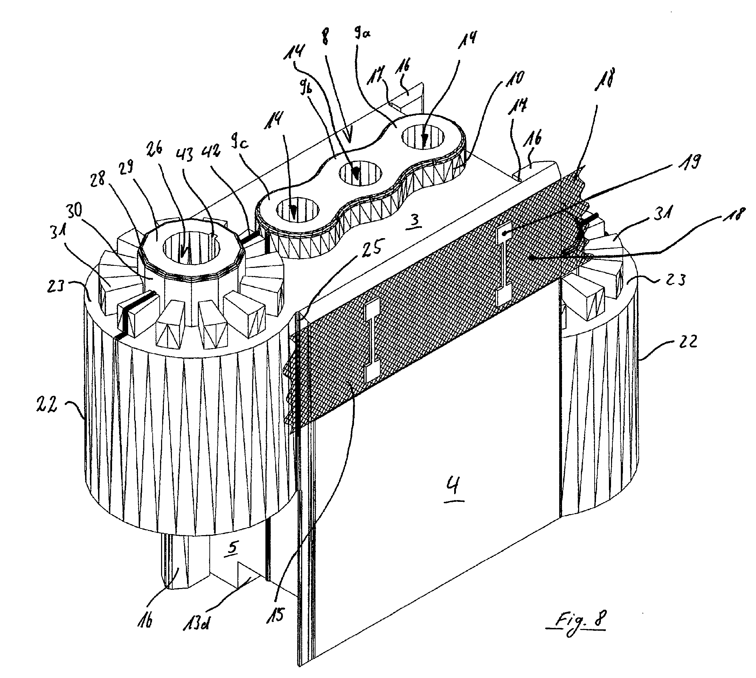

- Fig. 5: den Bauelementformkörper gemäß Fig. 4 in einer teilgeschnittenen Ansicht auf die gegenüberliegende Stirnfläche;

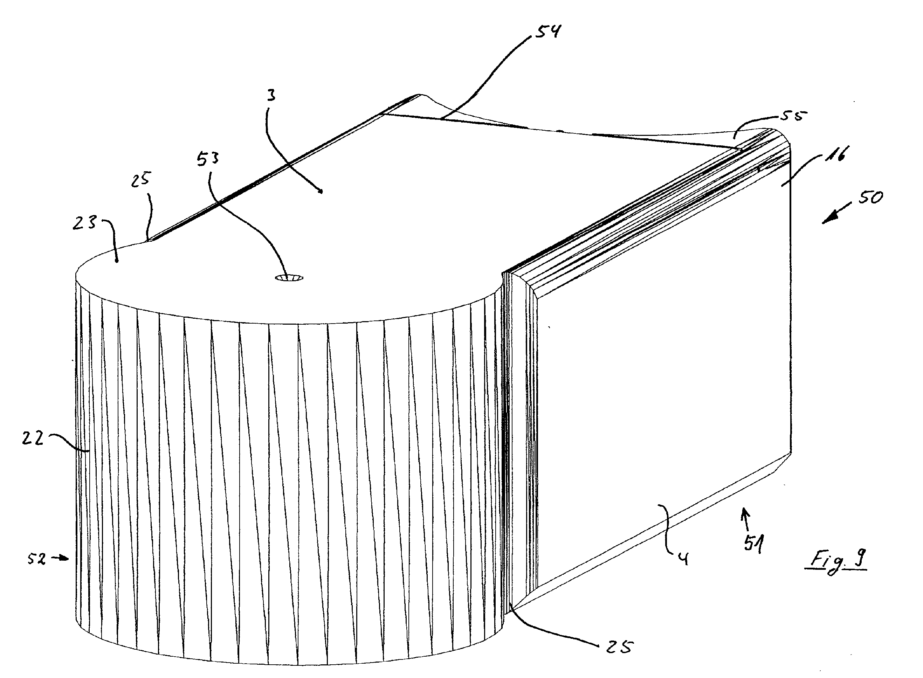

- Fig. 6: einen Bauelementformkörper gemäß Fig. 1 in einer oberseitigen Draufsicht;

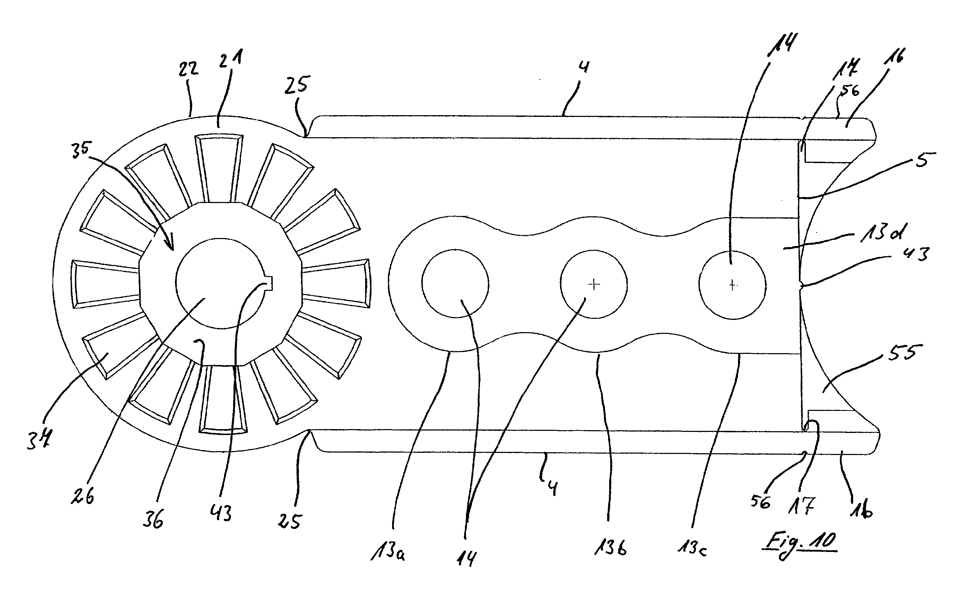

- Fig. 7: einen Bauelementformkörper gemäß Fig. 6 in einer unterseitigen Draufsicht;
- Fig. 8: einen Bauelementformkörper gemäß Fig. 1 mit einem Schneckenabwehrband in einer perspektivischen Ansicht auf die Oberseite;
- Fig. 9: einen erfindungsgemäßen Abschlußformkörper in einer perspektivischen oberseitigen Ansicht;
- Fig. 10: einen Formkörper gemäß Fig. 9 in einer unterseitigen Draufsicht;
- Fig. 11: einen Formkörper entsprechend Fig. 10 in einer perspektivischen Ansicht auf die Unterseite;
- Fig. 12: einen Formkörper gemäß Fig. 9 in einer oberseitigen Draufsicht;
- Fig. 13: einen Formkörper gemäß Fig. 9 in einer Seitenansicht;
- Fig. 14: einen Verbund aus Bauelementformkörpern bzw. Abschlußformkörpern in einer Draufsicht.

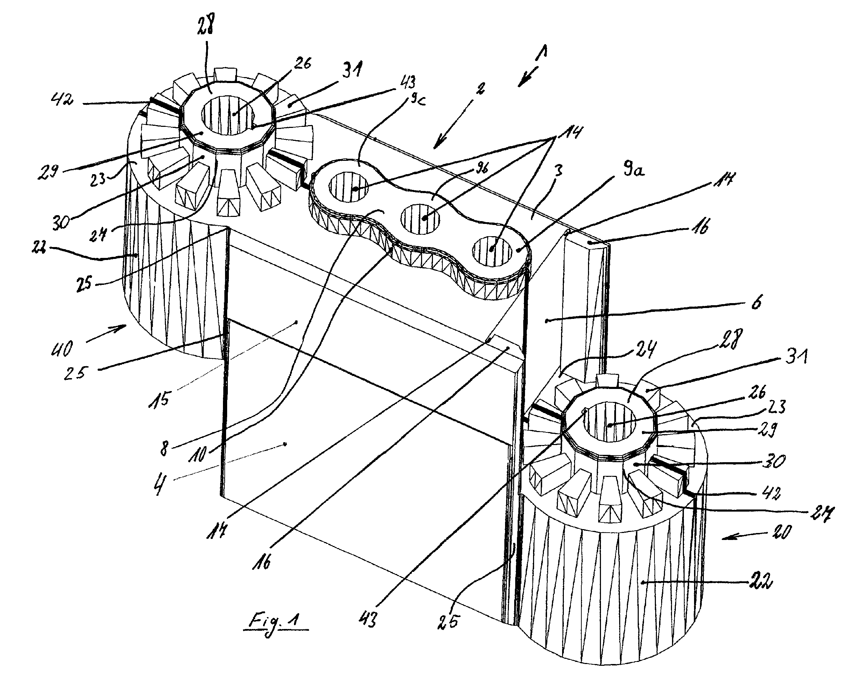

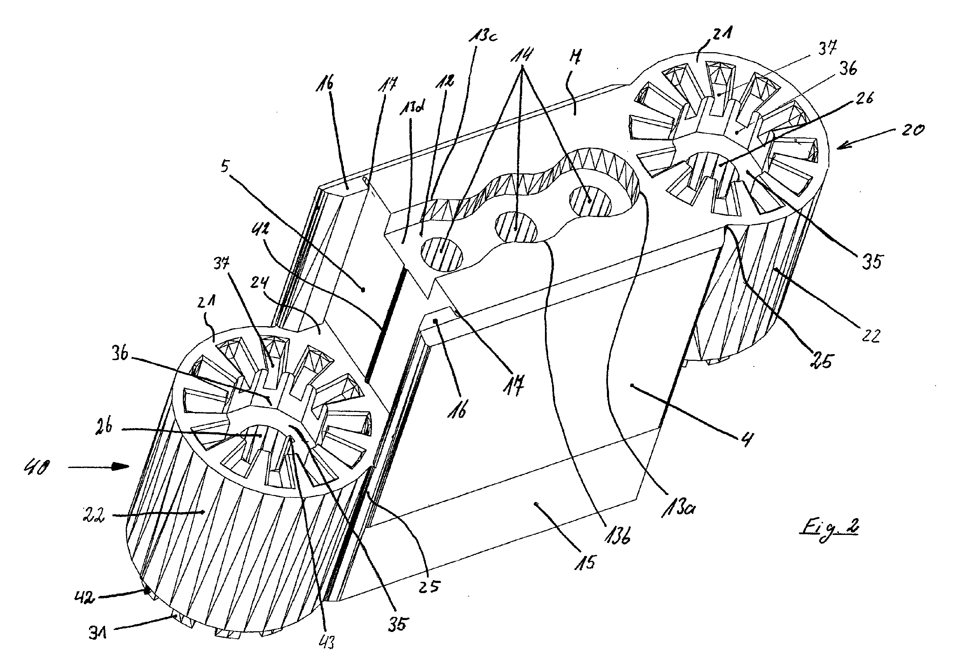

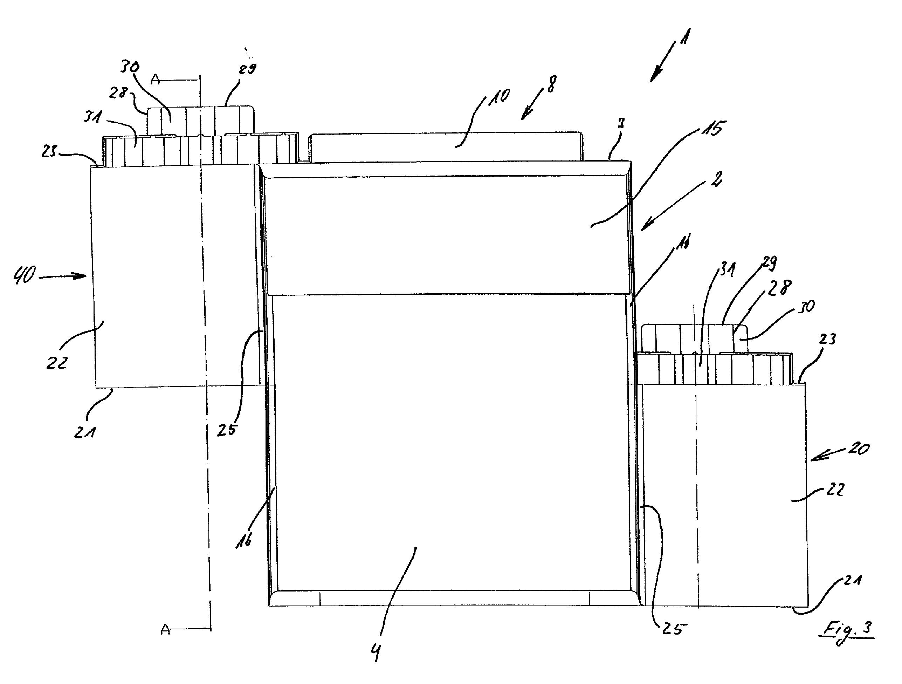

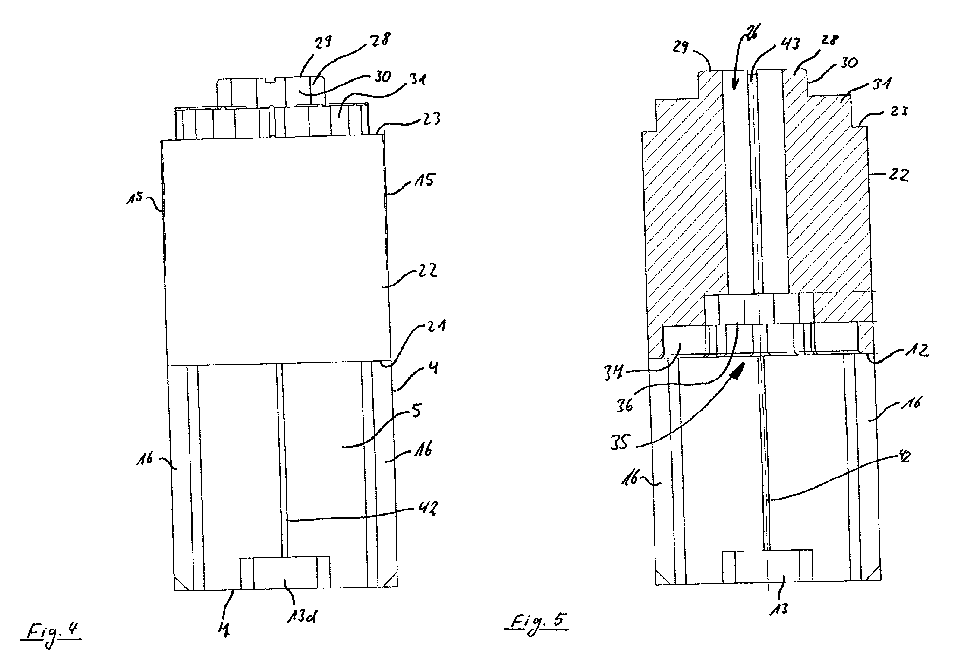

Ein erfindungsgemäßer Bauelementformkörper 1 (Fig. 1) besitzt einen kastenförmigen bzw. quaderförmigen Grundkörper 2 mit einer Deckenwandung 3, zwei breiten Seitenwandungen 4, zwei schmalen Stirnwandungen 5, 6 sowie einer Bodenwandung 7.

Die Deckenwandung 3 besitzt in etwa quermittig eine obere Steckkontur 8. Die obere Steckkontur 8 ist als hintereinander liegende Doppel-8 mit drei Auswölbungen 9 ausgebildet. Die Steckkontur steht mit einer Stufe 10 über die Deckenwandung 3 über, wobei die Steckkontur 8 eine größte Breite aufweist, die in etwa ein Drittel der Breite der Deckenwandung 3 entspricht. Die Steckkontur 8 schließt mit einer äußeren Bogenwölbung 9a, mit einer Stirnwandung 6 ab und erstreckt sich bis kurz vor die Stirnwandung 5.

Die Bodenwandung 7 weist eine zur Steckkontur 8 bezüglich Form und Lage korrespondierende, vertikal fluchtende Einsteckkontur in Form einer Doppel-8-artig geformten Steckausnehmung 12 auf, so daß eine Steckkontur 8 in eine Steckausnehmung 12 mit Passsitz formschlüssig einsteckbar ist. Die Steckausnehmung 12 besitzt drei Auswölbungen 13, wobei eine äußere Ausnehmung 13a auf Höhe der Stirnwandung 6 endet. Die in Längsrichtung gegenüberliegende Auswölbung 13c öffnet sich auf ihrer gesamten Breite mit einer Mündung 13d zur Stirnwandung 5.

Die Steckkonturen 8, 12 besitzen längsmittig je ein Durchgangsloch 14 pro Auswölbung 9, 13, wobei die Durchgangslöcher 14 quermittig in den jeweiligen Auswölbungen 9a, 9b, 9c, 13a, 13b, 13c angeordnet sind. Die Durchgangslöcher 14 sind hohlzylindrisch ausgebildet und erstrecken sich durch den gesamten Grundkörper 2.

Die Seitenwandungen 4 weisen mit der Deckenwandung 3 abschließend sich über die gesamte Länge erstreckend eine streifenartige Ausnehmung 15 auf, die sich in etwa ein Fünftel bis ein Sechstel der Höhe der Seitenwandung 4 erstreckt.

An der Stirnwandung 6 ist mit der Bodenwandung 7 abschließend ein Verbindungselement 20 angeordnet. Das Verbindungselement 20 ist im wesentlichen zylindrisch ausgebildet mit einer Bodenwandung 21, einer Umfangswandung 22 und einer Deckenwandung 23.

Das Verbindungselement 20 hat einen Durchmesser, der der Breite des Grundkörpers 2 zwischen den Seitenwandungen 4 in etwa entspricht. Die Zwickel 24 zwischen der Wandungsebene der Seitenwandung 6 und dem Umfangswandungsverlauf der Umfangswandung 22 des Verbindungselements 20 sind massiv ausgefüllt ausgebildet, so daß die Seitenwandungen 6 lediglich mit einer leichten Verjüngung oder Einschnürung 25 in die Umfangswandung 22 des Verbindungselements 20 übergehen.

Das Verbindungselement 20 besitzt eine axiale Bohrung bzw. ein axiales Durchgangsloch 26. Zentrisch um das Durchgangsloch 26 ist oberseitig auf der Deckenwandung 23 eine Steckkontur ausgebildet. Die Steckkontur weist ein über die Deckenwandung 23 mit einer Stufe bzw. Mantelwandung 27 überstehenden im wesentlichen zylindrischen Steckvorsprung 28 auf, der mit einer Deckenwandung 29 abschließt, die parallel zur Deckenwandung 23 verläuft. Die Mantelwandung 27 ist vieleckig ausgebildet mit beispielsweise zwölf nach außen weisenden Flächen 30. Der Steckvorsprung 28 hat einen Durchmesser, der in etwa der Hälfte des Durchmessers des Verbindungselements 20 entspricht.

Von den Flächen 30 erstrecken sich radiale Steckzähne bzw. Steckvorsprünge 31 nach außen, welche entsprechend der Anzahl der Flächen 30 je um 30° versetzt und voneinander beabstandet angeordnet sind. Die Steckzähne 31 verbreitern sich nach außen entsprechend der radialen Aufweitung der Deckenwandung 23 und erstrecken sich etwa über zwei Drittel der Strecke von der Fläche 30 zur Umfangswandung 22. Die Steckzähne 31 weisen ein anliegend an die Fläche 30 einen quadratischen Querschnitt auf, der nach außen hin in einen rechteckigen Querschnitt übergeht. Die Steckzähne besitzen eine Höhe, die in etwa der Hälfte der Höhe des Steckvorsprungs 28 entspricht.

Ausgehend von der Deckenwandung 23 des Verbindungselements 20 erstreckt sich in Verlängerung der Seitenwandungen 4 über die Stirnwandung 6 je ein schmaler Wandungsstreifen 16 bis zur Höhe der Einschnürung 25 über die gesamte Höhe der Stirnwandung 6 von der Deckenwandung 23 des Verbindungselements 20 bis zur Deckenwandung 3 des Grundkörpers 2. In seitlicher Verlängerung der Stirnwandung 6 sind Nuten 17 in die Wandungsstreifen 16 eingebracht, welche die Wandungsstreifen 16 verjüngen.

Die Bodenwandung 21 des Verbindungselements 20 besitzt eine Steckausnehmung 35, die nach Art, Form und Lage mit der Steckkontur der Deckenwandung 23 korrespondiert, so daß eine Steckkontur der Deckenwandung 23 formschlüssig mit Passsitz in die Steckausnehmung 35 einsteckbar ist.

Die Steckausnehmung 35 ist somit zentrisch um die Bohrung 26 mit einer zylindrischen bzw. mehrkantigen Aufnahmeausnehmung 36 für den Steckvorsprung 28 und von dieser radial nach außen verlaufenden Zahnausnehmungen 37 ausgebildet.

An der Stirnseite 5 ist ein Verbindungselement 40 ausgebildet, welches dem Verbindungselement 20 vom Aufbau her identisch entspricht.

Das Verbindungselement 40 ist jedoch derart am Grundkörper 2 angeordnet, daß seine Deckenwandung 23 mit der Deckenwandung 3 des Grundkörpers 2 abschließt und die Oberseite der Steckzähne 31 von der Höhe her mit der Oberseite der Steckkontur 8 abschließt.

Das Verbindungselement 40 weist wie das Verbindungselement 20 eine Höhe von der Bodenwandung 21 zur Deckenwandung 23 auf, die der Hälfte der Höhe des Grundkörpers 2 entspricht und erstreckt sich somit über die Hälfte der Stirnwandung 5 von der Deckenwandung 3 in Richtung zur Bodenwandung 7 des Grundkörpers 2.

Ausgehend von der Bodenwandung 21 des Verbindungselements 40 erstreckt sich in Verlängerung der Seitenwandung 4 über die Stirnwandung 5 hinaus je ein schmaler Wandungsstreifen 16 bis zur Einschnürung 25 über die Höhe der Stirnwandung 5 von der Bodenwandung 21 des Verbindungselements 40 zur Bodenwandung 7 des Grundkörpers 2. In seitlicher Verlängerung der Stirnwandung 5 sind Nuten 17 in die Wandungsstreifen 16 eingebracht, welche die Wandungsstreifen 16 verjüngen.

Entlang der Längsmitte des Bauelementformkörpers 1 ist an und entlang seiner Oberfläche eine Dichtung in Form eines Dichtstreifens 42 bzw. einer Dichtnoppe 42 angeordnet, welche vorzugsweise in das den Bauelementformkörper ausbildende Material eingebettet ist. Hierbei können die Steckkontur 8 sowie die Mantelwandung 27 ausgespart sein.

Die Durchgangslöcher 26 können in ihrer sie begrenzenden Mantelwandung je eine axiale Wasserablaufnut 43 aufweisen.

In die Aussparung 15 ist eine Schneckenschutzvorrichtung 18, insbesondere in Form von mit Siliciumcarbid beschichtetem Leinen oder Papier 18 (Fig. 8) aufgeklebt, eingelegt bzw. einlegbar, welche mit in das Material des Grundkörpers 2 einsteckbaren Klammern 19 in der Ausnehmung 15 befestigt werden kann. Als vorteilhaft hat sich das beschichtete Leinen oder Papier 18 mit einer Körnung von 60 herausgestellt.

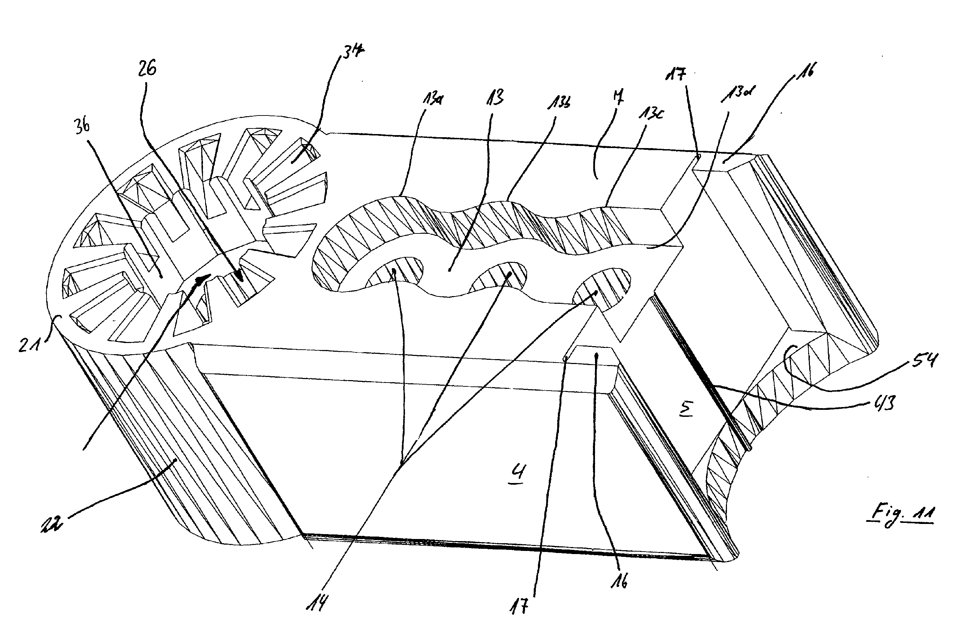

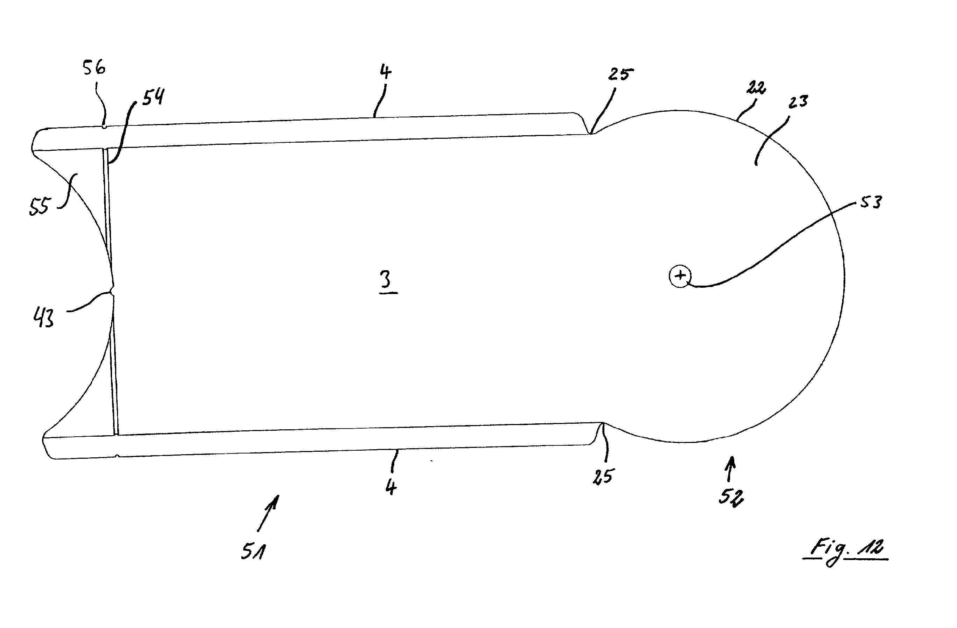

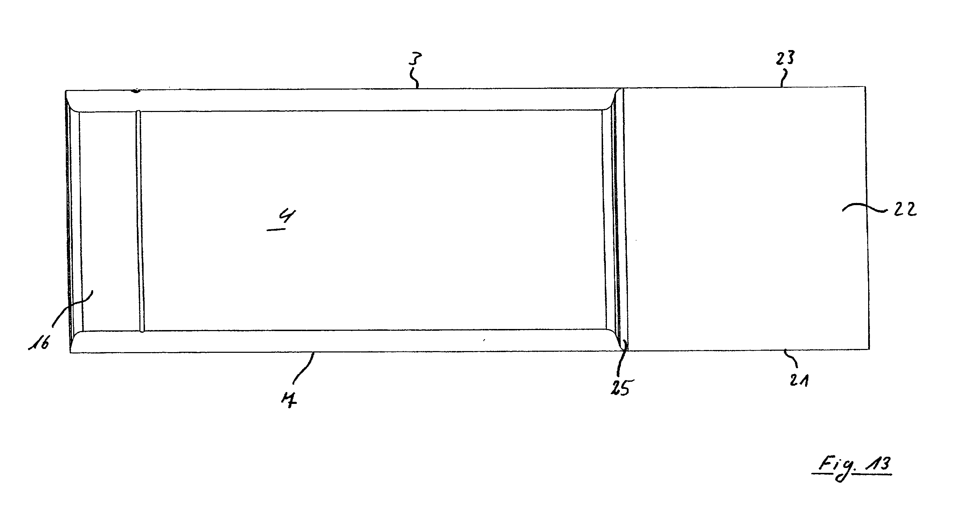

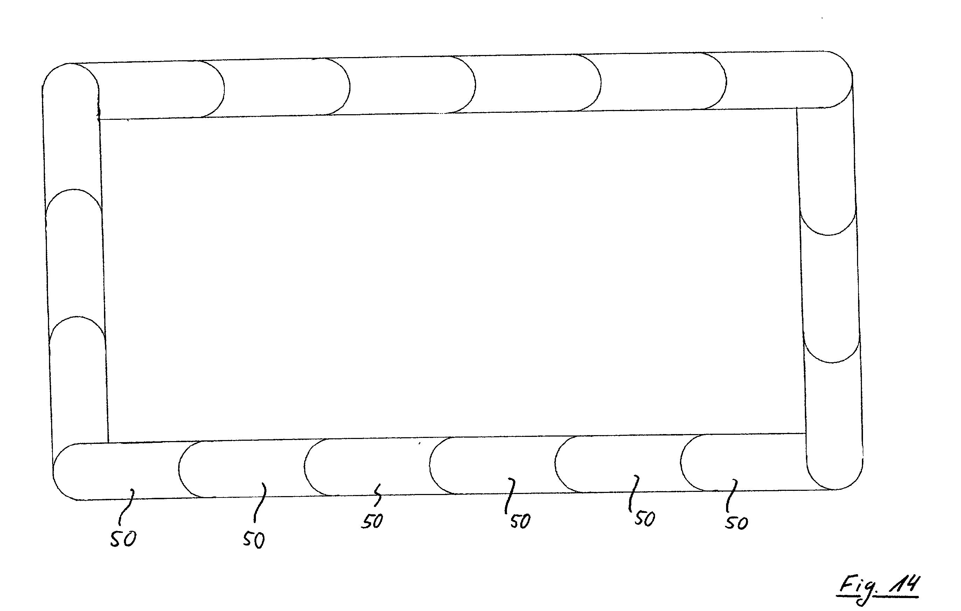

Ein erfindungsgemäßer Abschlußformkörper 50 (Fig. 9 bis 13) weist einen im wesentlichen quaderförmigen Grundkörper 51 auf, dessen Abmessungen und Aufbau einem Grundkörper 2 im wesentlichen entsprechen, insofern sind gleiche Teile mit gleichen Bezugszeichen versehen. Der Abschlußformkörper 50 besitzt in einem Stirnwandungsbereich ein Verbindungselement 52, welches gleich hoch ist wie der Grundkörper 51 und oberseitig glatt abschließt. Unterseitig weist dieses Verbindungselement 52 eine Steckausnehmung 35 mit Aufnahmeausnehmungen 36 und Zahnausnehmungen 37 auf. Die Bohrung 26 erstreckt sich von der Bodenwandung 21 bis kurz unter die Deckenwandung 23, wobei axial eine kleine Markierung 53 für das nachträgliche Aufbohren des Durchgangsloches 26, beispielsweise für die nachträgliche Montage einer Überdachung vorhanden ist. Im Bereich der Stirnwandung 5 ist die Deckenwandung 3 des Grundkörpers 51 kreisbogenförmig von den Vorderkanten der Wandungsstreifen 16 zur Stirnwandung 5 gezogen, so daß ein Formschluß mit einem Verbindungselement 52 eines benachbarten Steins 50 erzielbar ist. Oberhalb der Stirnwandung 5 und mit dieser sowie den Nuten 17 fluchtend ist eine Sollbruchnut 54 derart angeordnet, daß der bogenartige Deckenwandungsabschnitt 55 zusammen mit den Wandungsstreifen 16 vom Grundkörper 51 abtrennbar ist. Zu diesem Zweck kann zudem auf gleicher Höhe mit den Nuten 17 außenseitig eine Sollbruchnut 56 zwischen Seitenwandungen 4 und Wandungsstreifen 16 angeordnet sein.

Bei einem Grundkörper 51 ist die Deckenwandung 3 glatt ausgebildet, wobei die Durchgangslöcher 14 von der Steckkontur 12 bis kurz unter die Deckenwandung 3 zumindest jedoch ein Stück in den Grundkörper 2 hinein eingebracht angeordnet sind.

Es versteht sich von selbst, daß anstelle einer Steckverzahnung auch jede andere Steckkontur sowohl für die einsteckenden als auch für die aufnehmenden Konturen Verwendung finden kann, die in der Lage ist, in einem gewissen Maße Drehbewegungen oder Drehmomente um die Steckachse aufzunehmen. Im einfachsten Fall kann dies beispielsweise ein Halbkreisprofil, ein Dreiecksprofil, ein Mehrkantprofil oder ähnliches sein. Darüber hinaus müssen die Zähne nicht quaderförmig ausgebildet sein, sondern können auch eine dachförmige oder ähnliche Ausgestaltung aufweisen, sofern Zähne oder entsprechende aufnehmende Konturen vorhanden sind.

In einer bevorzugten Ausführungsform werden beide Formkörper aus geschäumtem Polystyrol (Styropor) mit einer Materialgüte im Bereich von P 15 bis P 60 ausgeführt, Materialdichten bis P 200 sind möglich. Darüber hinaus können auch alle Thermoplaste, Duroplaste und Elastoplaste, Kunststoffrecyclingmaterialien und alle Arten von Holz, wobei die Holzausführung anstatt der Steckverzahnung eine Verzackung hat, eingesetzt werden.

Bei der Verwendung von geschäumten Kunststoffen ist von Vorteil, daß durch die sehr guten Isolationseigenschaften die Erdwärme ausgenützt wird und hierdurch mindestens einmal im Jahr mehr geerntet werden kann, wenn mit den erfindungsgemäßen Formkörpern ein Beet, insbesondere ein Hochbeet erstellt wird. Dieser Vorteil kann noch erhöht werden, wenn die Abschlußformkörper deutlich über die Beetoberkante überstehen und auf die Abschlußformkörper ein durchsichtiges Abdeckelement aufgelegt oder an diesem auflegbar befestigbar ist, so daß zumindest zeitweilig ein Frühbeet erzielbar ist.

Im folgenden wird die Verwendung der erfindungsgemäßen Formkörper näher erläutert.

Um ein Hochbeet zu erstellen, wird die Aufstellfläche der gewünschten Form ca. 10 cm tief ausgehoben und der Boden entsprechend aufgelockert. Über die gesamte Fläche kann feinmaschiges Metallgitter als Mäuseschutz ausgelegt werden. Anschließend werden entlang der Außenkanten der gewünschten Form des Beetes, Hochbeetes, Frühbeetes etc. die erfindungsgemäßen Bauelementformkörper verlegt, wobei ein Verbindungselement 40 eines Formkörpers 1 von oben auf das Verbindungselement 20 des nächsten Formkörpers aufgesteckt wird. Entsprechend der Anzahl der Zähne können auch hier von der geraden Linie abweichende, abknickende Verläufe realisiert werden, wobei beispielsweise bei 12 Zähnen und 12 Kantflächen der Steckgeometrie die Richtung in 30°-Schritten geändert werden kann. Um 90°-Winkel im Verlauf zu realisieren, wird der Wandungsabschnitt 16 des dem Winkel vorgeordneten Formkörpers entlang der Nut 17 abgebrochen oder abgeschnitten, so daß der folgende Formkörper um 90° versetzt aufgesteckt werden kann.

Ist die Beetkontur mit einer Lage der erfindungsgemäßen Bauelementformkörper vollumfänglich umschlossen, können weitere Lagen an Bauelementformkörpern aufgelegt werden, wobei die oberen Bauelementformkörper mit Verbindungselementen 20 auf die Konturen der darunter liegenden Verbindungselemente 40 gesteckt werden. Ist eine gewünschte Bauhöhe erreicht, werden Befestigungsstangen (nicht gezeigt) beispielsweise aus Holz, Metall oder Kunststoff durch die Durchgangslöcher 26 bzw. 14 durchgesteckt und in den Boden eingeschlagen, wobei die Befestigungsstangen ein Stück über die oberste Lage von Bauelementformkörpern vorstehen können. Anschließend werden die erfindungsgemäßen Abschlußformkörper von oben auf die Bauelementformkörper aufgesteckt, wobei jeweils ein Verbindungselement 52 auf die Kontur eines Verbindungselements 40 gesteckt wird. Hierbei gelangen die Verbindungsstangen in die Sacklöcher 26 bzw. 14 der Abschlußformkörper. Um eine 90°-Abknickung der Wand zu realisieren, wird wie bei den Bauelementformkörpern entlang der Nut 17 ein Wandungsstreifen 16 abgeschnitten, wobei zusätzlich ein bogenförmiger Deckenwandungsabschnitt bis zur Mitte der Stirnwandung 5 entlang der Nut 54 abgetrennt wird.

Um Schnecken daran zu hindern, über die Bauelementformkörper in ein Beet zu gelangen, wird vorzugsweise selbstklebendes beschichtetes Leinen, Papier oder ähnliches, vorzugsweise mit einer Körnung von 60, in die Ausnehmungen 15 eingeklebt und/oder mit Klammern an den Bauelementformkörpern befestigt, wobei das Leinen oder Papier umlaufend um eine gesamte Beetkontur an den Bauelementformkörpern befestigt wird, um keine Lücke zu lassen.

Vorzugsweise sind alle Kanten der Formkörper, insbesondere alle Kanten, die Steckkonturen begrenzen, angefast.

## Patentansprüche

1. Bauelementformkörper für den Garten- und Landschaftsbau aufweisend:
einen im wesentlichen kastenförmigen Grundkörper (2), sowie
zwei Verbindungselemente (20, 40), welche an gegenüberliegenden Stirnwandungen (5, 6) des kastenförmigen Grundkörpers (2) angeordnet sind, wobei
die Verbindungselemente (20, 40) eine Höhe aufweisen, die in etwa der Hälfte der Höhe des Grundkörpers (2) entspricht und
die Verbindungselemente (20, 40) in der Höhe eines Verbindungselements (20, 40) zueinander versetzt angeordnet sind, so daß ein Verbindungselement mit der Oberseite und das andere Verbindungselement mit der Unterseite des kastenförmigen Grundkörpers (2) abschließt, wobei die Verbindungselemente bezüglich der Höhe des Grundkörpers (2) oberseitig und unterseitig eine Steckkontur aufweisen.

2. Bauelementformkörper nach Anspruch 1,
**dadurch gekennzeichnet, dass** die Verbindungselemente bezogen auf ihre Höhe unter- und oberseitig eine Steckkontur aufweisen, wobei eine Steckkontur eine aufnehmende Steckkontur und die gegenüberliegend angeordnete Steckkontur eine einsteckende Steckkontur ist.

3. Bauelementformkörper nach einem der vorhergehenden Ansprüche,
**dadurch gekennzeichnet, dass** die Verbindungselemente (20, 40) oberseitig eine einsteckende und unterseitig eine aufnehmende Steckkontur aufweisen.

4. Bauelementformkörper nach einem der vorhergehenden Ansprüche,
**dadurch gekennzeichnet, dass** der kastenförmige Grundkörper (2) bezogen auf seine Höhe ober- und unterseitig eine Steckkontur (8, 13) aufweist.

5. Bauelementformkörper nach einem der vorhergehenden Ansprüche,
**dadurch gekennzeichnet, dass** der Kasten oberseitig eine einsteckende Steckkontur (8) und unterseitig eine aufnehmende Steckkontur (13) aufweist.

6. Bauelementformkörper nach einem der vorhergehenden Ansprüche,
**dadurch gekennzeichnet, dass** der Grundkörper (2) eine schmale Deckenwandung (3) zwei breite Seitenwandungen (4) sowie zwei schmale Stirnwandungen (5, 6) sowie eine schmale Bodenwandung (7) aufweist.

7. Bauelementformkörper nach einem der vorhergehenden Ansprüche,
**dadurch gekennzeichnet, dass** die einsteckende Steckkontur (8) im Bereich der Deckenwandung (3) in etwa quermittig angeordnet ist.

8. Bauelementformkörper nach einem der vorhergehenden Ansprüche,
**dadurch gekennzeichnet, dass** die obere Steckkontur (8) als hintereinander liegende Doppel-8 mit drei Auswölbungen (9) ausgebildet ist, wobei die Steckkontur (8) mit einer Stufe (10) über die Deckenwandung (3) übersteht und in der Bodenwandung (7) eine zur Steckkontur (8) bezüglich Form und Lage korrespondierende, vertikal fluchtende Einsteckkontur in Form einer Doppel-8-artig geformten Steckausnehmung (12) vorhanden ist, so daß eine Steckkontur (8) in eine Steckausnehmung (12) mit Paßsitz formschlüssig einsteckbar ist.

9. Bauelementformkörper nach einem der vorhergehenden Ansprüche,
**dadurch gekennzeichnet, dass** die Steckkonturen (8, 12) längsmittig zumindest ja ein Durchgangsloch (14) aufweisen, wobei das Durchgangsloch (14) oder die Durchgangslöcher (14) hohlzylindrisch ausgebildet sind und sich durch den gesamten Grundkörper (2) erstrecken.

10. Bauelementformkörper nach einem der vorhergehenden Ansprüche,
**dadurch gekennzeichnet, dass** die Verbindungselemente (20, 40) einen Durchmesser aufweisen, der der Breite des Grundkörpers (2) zwischen den Seitenwandungen (4) in etwa entspricht.

11. Bauelementformkörper nach einem der vorhergehenden Ansprüche,
**dadurch gekennzeichnet, dass** die Verbindungselemente (20, 40) eine axiale Bohrung bzw. ein axiales Durchgangsloch (26) aufweisen.

12. Bauelementformkörper nach einem der vorhergehenden Ansprüche,
**dadurch gekennzeichnet, dass** zentrisch um das Durchgangsloch (26) oberseitig auf der Deckenwandung (23) des Verbindungselements (20, 40) eine einsteckende Steckkontur ausgebildet ist, wobei die Steckkontur ein über die Deckenwandung (23) mit einer Stufe bzw. Mantelwandung (27) überstehenden Steckvorsprung (28) aufweist, wobei sich von einer Mantelwandung (27) des Steckvorsprungs (28) radial nach außen Zähne, Rillen, Zacken od. dgl. erstrecken.

13. Bauelementformkörper nach einem der vorhergehenden Ansprüche,
**dadurch gekennzeichnet, dass** der Steckvorsprung einen halbzylindrischen, dreieckigen, quadratischen, rechteckigen oder mehrkantigen Querschnitt aufweist.

14. Bauelementformkörper nach einem der vorhergehenden Ansprüche,
**dadurch gekennzeichnet, dass** die Verbindungselemente (20, 40) unterseitig in einer Bodenwandung (21) eine Steckausnehmung (35) aufweisen, die nach Art, Form und Lage mit der Steckkontur der Deckenwandung (23) korrespondiert, so daß eine Steckkontur der Deckenwandung (23) formschlüssig mit Paßsitz in die Steckausnehmung (35) einsteckbar ist.

15. Bauelementformkörper nach einem der vorhergehenden Ansprüche,
**dadurch gekennzeichnet, dass** die Seitenwandungen (4) mit der Deckenwandung (3) abschließend sich über die gesamte Länge erstreckend eine streifenartige Ausnehmung (15) für die Aufnahme von Leinen oder Papier bzw. mit Siliciumcarbid-Körnern beschichtetem Leinen oder Papier oder Kunststoff (16) aufweisen.

16. Bauelementformkörper nach einem der vorhergehenden Ansprüche,
**dadurch gekennzeichnet, dass** die Verbindungselemente (20, 40) im wesentlichen zylindrisch bzw. trommelartig mit einer Bodenwandung (21), einer Mantelwandung (22) und einer Dekkenwandung (23) ausgebildet sind.

17. Bauelementformkörper nach einem der vorhergehenden Ansprüche,
**dadurch gekennzeichnet, dass** entlang der Längsmitte des Bauelementformkörpers (1) an und entlang seiner Oberfläche eine Dichtung in Form eines Dichtstreifens (42) bzw. einer Dichtschnur (42) angeordnet ist, welche vorzugsweise in das den Bauelementformkörper ausbildende Material eingebettet ist.

18. Bauelementformkörper nach einem der vorhergehenden Ansprüche,
**dadurch gekennzeichnet, dass** in dem von Verbindungselementen (20, 40) freigesparten Bereich der Stirnwandungen (5, 6) sich in Verlängerung der Seitenwandungen (4) über die Stirnwandungen (5, 6) je ein schmaler Wandungsstreifen erstreckt, wobei in seitlicher Verlängerung der Stirnwandungen (5, 6) Nuten (17) in die Wandungsstreifen (16) eingebracht sind, welche die Wandungsstreifen (16) verjüngen.

19. Bauelementformkörper nach einem der vorhergehenden Ansprüche,
**dadurch gekennzeichnet, dass** in den Aussparungen (15) die Schneckenschutzvorrichtung (18) eingelegt wird, wobei die Schneckenschutzvorrichtung (18) aus besandetem Papier (18) oder besandetem Kunststoff od. dgl. ausgebildet ist, welche selbstklebend oder mit Klammern am Grundkörper (2) angeordnet ist, wobei die Schneckenschutzvorrichtung vorzugsweise eine Körnung von 60 aufweist.

20. Abschlußformkörper für Bauelementformkörper nach einem der vorhergehenden Ansprüche,
**dadurch gekennzeichnet, dass** der Abschlußformkörper (50) einen kasten- bzw. quaderförmigen Grundkörper (51) aufweist, dessen Abmessungen und Aufbau einem Grundkörper (2) entspricht, wobei in einem Stirnwandungsbereich des Abschlußformkörpers (50) ein Verbindungselement (52) vorhanden ist, welches sich über die gesamte Höhe der Stirnwandung des Abschlußformkörpers erstreckt, wobei das Verbindungselement eine glatte Oberseite aufweist.

21. Abschlußformkörper nach Anspruch 20,
**dadurch gekennzeichnet, dass** das Verbindungselement (52) unterseitig eine aufnehmende oder einsteckende Steckkontur aufweist.

22. Abschlußformkörper nach Anspruch 21,
**dadurch gekennzeichnet, dass** das Verbindungselement (52) unterseitig eine Steckausnehmung (35) aufweist, wobei die Bohrung (26) sich von der Bodenwandung (21) des Verbindungselements (52) bis kurz unter die Deckenwandung (23) erstreckt, wobei axial in der Deckenwandung eine kleine Markierung (53) vorhanden ist.

23. Abschlußformkörper nach einem der Ansprüche 20 bis 22,
**dadurch gekennzeichnet, dass** im Bereich der Stirnwandung (5) die Deckenwandung (3) des Grundkörpers (51) kreisbogenförmig von den Vorderkanten der Wandungsstreifen (16) zur Stirnwandung (5) hingezogen ist, so dass ein Formschluss mit einem Verbindungselement (52) eines benachbarten Formkörpers (50) erzielbar ist.

24. Abschlußformkörper nach einem der Ansprüche 19 bis 22,
**dadurch gekennzeichnet, dass** oberhalb der Stirnwandung (5) und mit dieser sowie den Nuten (17) fluchtend eine Sollbruchnut (54) derart angeordnet ist, dass der bogenartige Deckenwandungsabschnitt (55) zusammen mit der den Wandungsstreifen (16) vom Grundkörper (51) abtrennbar ist.

25. Abschlußformkörper nach einem der Ansprüche 19 bis 23,
**dadurch gekennzeichnet, dass** der Grundkörper (51) eine Deckenwandung (3) aufweist, welche glatt und ohne Steckkontur ausgebildet ist, wobei die Durchgangslöcher (14) von der Steckkontur (12) in der Unterseite bis kurz unter die Deckenwandung (3) zumindest jedoch ein Stück in den Grundkörper (2) eingebracht angeordnet sind.

26. Abschlußformkörper nach einem der vorhergehenden Ansprüche,
**dadurch gekennzeichnet, dass** der Abschlußformkörper aus geschäumten Kunststoffen, insbesondere Polystyrol ausgebildet ist.

27. Bauelementformkörper nach einem der vorhergehenden Ansprüche,
**dadurch gekennzeichnet, dass** der Formkörper aus Thermoplasten, Duroplasten, Elastoplasten, Kunststoffrecyclingmaterialien, Holz od. dgl. ausgebildet ist.
